# EUROPEAN PATENT APPLICATION

(11) **EP 3 229 058 A1**
(43) Date of publication of application: **11.10.2017**
(21) Application number: 15865611.6
(22) Date of filing: 30.10.2015
(51) Int. Cl.: G02B 27/01

(54) **MICROLENS ARRAY BASED NEAR-EYE DISPLAY (NED)**

(30) Priority: 05.12.2014 CN 201410741053
(71) Applicant: Beijing ANTVR Technology Co., Ltd., Beijing 100083 (CN)
(72) Inventor: QIN, Zheng, Beijing 100083 (CN)
(74) Representative: Gardiner, Stephen Robin
(86) International application number: PCT/CN2015/093331
(87) International publication number: WO 2016/086742

(57) **Abstract**

The present invention provides a microlens array-based near-eye display, comprising a display screen facing the eyes and displaying images, a microlens array located between the display screen and the eyes, an eyeball-tracing camera and an image processing unit, wherein the microlens array is used for magnifying and projecting the image displayed on the display screen onto the retinas of the eyes, and comprises a plurality of microlens units having the same shape and structure and arranged into an array; the image displayed on the display screen is divided into a plurality of subimages spaced apart and having the same shape and size, each corresponding to one of the microlens units in the microlens array; the image processing unit is used for segmenting an original image into a plurality of subimages matching with the microlens array for presentation, and adjusting the image using the position information of the eyes acquired by the eyeball-tracking camera; and the eyeball-tracking camera is used for tracking and acquiring the position information of pupils of the eyes.

## Description

### TECHNICAL FIELD

The present invention relates to a near-eye display, in particular to a near-eye display capable of adapting to the visual state of human eyes to display images.

### BACKGROUND

A near-eye display (NED) is a display which projects images directly into a viewer's eyes. It is typically made into a head-mounted display (HMD) for convenient wear by a user, thus providing an immersive display experience. The near-eye display has a display screen located within 10 cm from eyeballs, and images within such a close distance generally cannot be seen clearly by human eyes. The near-eye display, however, focuses and projects images onto the retina of a human eye by means of a particularly-designed lens array, which images are presented to the eyes of a user as magnified virtual images after being processed by the visual nervous system, and thus may be used for virtual or enhanced reality application.

In existing near-eye display devices, the lens array used is a microlens array with smaller diameter (micron scale), so that the microlens array generally has a very short focal length and has a focal plane which is generally the same as a plane of the images on the display screen. For users of different vision, the short focal length is unfavorable for adjustment of the spacing between the microlens array and the display screen, and the effectiveness after adjustment is limited. Currently, the key to solving the above technical problem is to adjust the size of the image displayed on the display screen, so as to adapt to users of different vision, but the processing of the displayed image is relatively complex and difficult to implement.

Thus, there is a need for a near-eye display that has a simple structure and a larger focal length, is easy to adjust and meets different vision requirements.

### SUMMARY

The present invention aims to provide a microlens array-based near-eye display, which comprises a display screen facing the eyes and displaying images, a microlens array located between the display screen and the eyes, an eyeball-tracking camera and an image processing unit. The microlens array is used for magnifying and projecting the image displayed on the display screen onto the retinas of the eyes. It comprises a plurality of microlens units having the same shape and structure and arranged into an array, each of which having the shape selected from a circular, rectangular or regular hexagonal shape. If the microlens unit is circular, it has a diameter D1 of 3∼10 mm; and if the microlens unit is rectangular or regular hexagonal, its circumscribed circle has a diameter D1 of 3∼10mm. The image displayed on the display screen is divided into a plurality of subimages spaced apart and having the same shape and size, each corresponding to one of the microlens units in the microlens array. The image processing unit is used for segmenting an original image into a plurality of subimages matching with the microlens array for presentation, and adjusting the image using the position information of the eyes acquired by the eyeball-tracking camera. The eyeball-tracking camera is used for tracking and acquiring the position information of pupils of the eyes, and adjusting the position of the subimages according to the position information so as to keep the subimages in the same straight line as corresponding microlens units and the pupils. The distance between the display screen and the microlens array is adjustable.

Preferably, each of the microlens units is a plano-convex lens or a double convex lens.

Preferably, the distance between the display screen and the microlens array is 2 to 3 times D1.

Preferably, the distance between the display screen and the microlens array is 2.5 times D1.

Preferably, the image processing unit performs subimage segmentation based on the size of the microlens units, so as to all each subimage to completely fall within the microlens unit.

Preferably, the shapes of the subimages are regular hexagonal or square.

Preferably, two eyeball-tracking cameras are provided for tracking the left eye and right eye of the user, respectively.

Preferably, each of the eyeball-tracking cameras is arranged at the center of an upper edge of the display screen at a position right in front of the eye.

According to another aspect of the present invention, the present invention aims to provide method for displaying images using the near-eye display according to any one of claims 1-8, comprising the following steps: segmenting the original image into a plurality of subimages matching with the microlens array for presentation, each of which being sized to completely fall within a corresponding microlens unit; adjusting the distance between the display screen and the microlens array so as to allow the plurality of subimages to be tightly spliced together to form a full image for display; and adjusting the position of the subimages so as to allow the subimages to be always kept in the same straight line as corresponding microlens units and the pupils of the eyes when the eyes rotate.

The near-eye display according to the present invention is simple in structure, easy to adjust and suitable for wear and use by users having different diopters.

It will be appreciated that both the foregoing general description and the following detailed description are exemplary and explanatory and should not be construed as limitations on what may be claimed of the invention.

### BRIEF DESCRIPTION OF THE DRAWINGS

Further objects, functions and advantages of the present invention will be illustrated by the following description of the embodiments of the invention with reference to the accompanying drawings, in which:
Fig. 1 schematically shows a main structural view of a near-eye display according to the present invention;
Fig. 2 shows a schematic view of a method for offsetting images displayed by the near-eye display according to the present invention; and
Fig. 3 schematically shows an arrangement view of a microlens array of the near-eye display according to the present invention.

### DETAILED DESCRIPTION

Objects and functions of the present invention as well as methods for realizing these objects and functions will be elucidated with reference to exemplary embodiments. However, the present invention is not limited to the following disclosed exemplary embodiments, but may be implemented in different ways. The description of the invention is merely provided to assist those of ordinary skill in the art in a comprehensive understanding of specific details of the invention in nature.

Hereinafter, embodiments of the present invention will be described with reference to the drawings. In the drawings, like reference numerals designate like or similar parts.

The present invention provides a microlens array-based near-eye display which allows eyes to see a full image in the case of different visions and viewing angles by adjusting the spacing between the microlens array and a display screen and the position of the image.

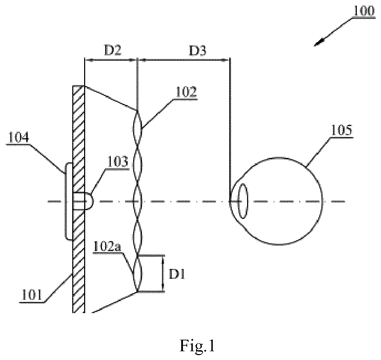

Fig. 1 shows a first embodiment of the microlens array-based near-eye display according to the present invention. As shown in Fig. 1, the near-eye display 100 comprises a display screen 101 facing the eyes 105 and displaying images, a microlens array 102 located between the display screen and the eyes 105, an eyeball-tracking camera 103 and an image processing unit 103.

The display screen 101 is used for displaying images needing to be presented. According to an embodiment of the present invention, for single-eye display, there is one display screen; while for two-eye display, there may be two display screens. Preferably, the image displayed on the display screen is divided into a plurality of subimages spaced apart and having the same shape and size, each corresponding to one of the microlens units 102a in the microlens array 102.

The microlens array 102 is used for magnifying and projecting the image displayed on the display screen onto the retina of the eye 105, which image is then focused on the retina by the lens of the eye into a near-eye image that can be clearly seen by the eye 105. The microlens array 102 comprises a plurality of microlens units 102a having the same shape and structure and arranged into an array, each of which being a plano-convex lens or a double convex lens and having a circular, rectangular or regular hexagonal shape.

According to an embodiment of the present invention, if the microlens used is circular, it has a diameter D1 of about 5∼10mm; and if the microlens is rectangular or regular hexagonal, its circumscribed circle has a diameter D1 of about 5∼10mm. Such a microlens with large diameter has a focal length and thus a large adjustment range, playing a role similar to that of a magnifying glass. The distance D2 between the display screen 101 and the microlens array 102 is about 2 times D1 to 3 times D1, preferably 2.5 times D1, and is adjustable. In view of different diopters of the eye 105, the distance D2 can be adjusted to allow the eye 105 to view the clearest image.

The eyeball-tracking camera 103, arranged at the center of an upper edge of the display screen 101 at a position right in front of the eye, is used for tracking and acquiring the position of the pupil of the eye 105, for example by acquiring an angle between a current line of sight of the eye 105 and a line of sight straight ahead, or by acquiring information such as a pupil deflection distance of the eye 105, etc. Likewise, only one eyeball-tracking camera 103 is needed for a near-eye display 102 configured for single-eye observation.

The image processing unit 104 is used for processing and adjusting the image display mode, including segmenting an original image into a plurality of subimages matching with the microlens array for presentation according to the size of the microlens units, and acquiring the position information of the eye 105 by means of the eyeball-tracking camera 103 and making relevant adjustment to the image based on the position information. The specific segmenting and adjusting method can be found in the following detailed description of the embodiment.

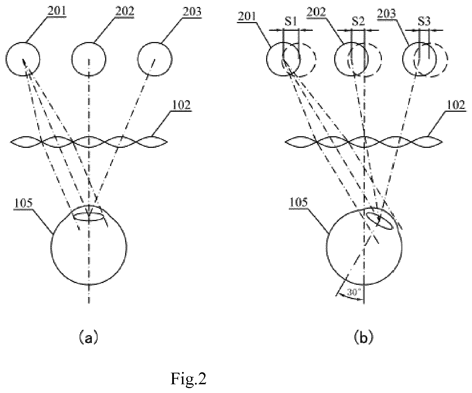

Figs. 2(a)-2(b) show an embodiment of a method of adjusting the image by the image processing unit 104 according to the position information photographed by the eyeball-tracking camera 103 of the present invention. As shown in Fig. 2(a), the eye 105 is shown viewing the image presented on the display screen 101 right in front of the eye, and three areas of the display screen 101 presenting the image are selected for illustration of the specific image adjustment method. There are three subimages, a first subimage 201, a second subimage 202 and a third subimage 203. Fig. 2(a) also shows that light emitted by the first subimage 201 passes through the corresponding micro lens unit 102a and is diverged, which diverged light just covers the pupil of the eye 105, and at this time the pupil of the eye 105, the center of the first subimage 201 and the corresponding microlens unit 102a are located in a straight line. The subimage in the above area can also be clearly viewed by the eye via the microlens array 102. Likely, the second subimage 202 and the third subimage 203 also have the above property.

As shown in Fig. 2(b), after the eye rotates 30 degrees to the right, the eye 105 cannot see the above three areas clearly, especially the first subimage 201 which is totally invisible, thus affecting the visual effect of the eye. Therefore, the first subimage 201, the second subimage 202 and the third subimage 203 should be offset correspondingly. In order to allow the first subimage 201, the second subimage 202 and the third subimage 203 to be viewed by the eye as much as possible, the three subimages should be moved a certain distance in an opposite direction to the rotation direction of the eye 105. Fig. 2(b) also shows that light emitted by the first subimage 201 passes through the corresponding microlens unit 102a and is diverged, which diverged light just covers the pupil of the eye 105 after rotation, that is to say, the first subimage 201, the corresponding microlens unit 105 and the pupil of the eye 105 are all located in a straight line. The first subimage 201 has a larger offset distance S1, while the second subimage 202 and the third subimage 203 have a smaller offset distance S2 and S3, ensuring that light of corresponding pixels of the first subimage 201, the second subimage 202 and the third subimage 203 can enter the eye 105. The moving operations of the above image displayed are all accomplished through the cooperation of the image processing unit 104 and the eyeball-tracking camera 103.

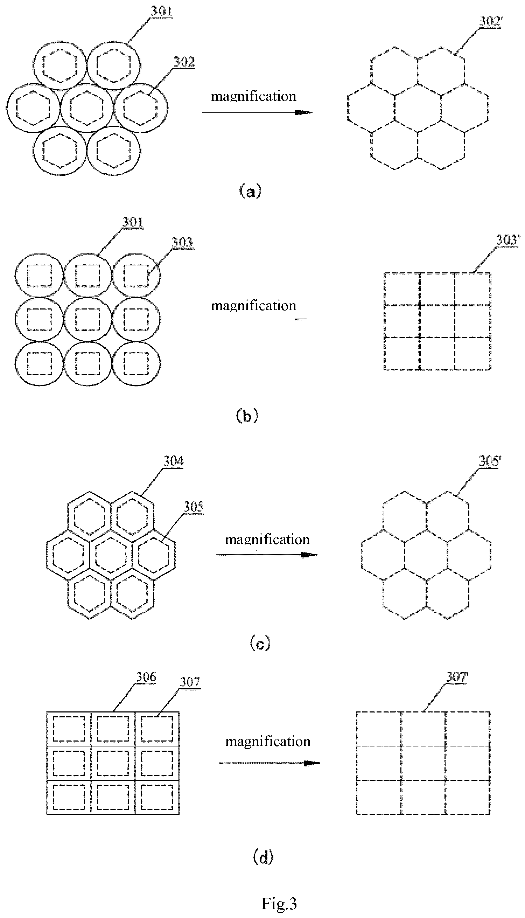

Described below is a method by which the image processing unit 104 segments the original image into a plurality of subimages matching with the microlens array 102 for presentation, and a method of subimage splicing. When the microlens units 102a in the microlens array 102 are different in shape, the original image may be segmented into subimages of different shapes by the image processing unit 104, and the image splicing method may also be different accordingly. Figs. 3(a)-3(d) respectively show microlens units in three different shapes, the microlens units 301 in Figs. 3(a) and 3(b) being circular, the microlens unit 302 in Fig. 3(c) being regular hexagonal, and the microlens unit 305 in Fig. 3(d) being rectangular.

As shown in Figs. 3(a) and 3(b), the circular microlens units 301 are arranged differently with the circular microlens units 301 in Fig. 3(a) tightly arranged in a staggered way, that is, the lines between centers of three mutually adjacent circular microlens units 301 constitute an equilateral triangle, with its corresponding image display areas 302 being regular hexagons. In particular, the image processing unit 104 segments the original image into a plurality of regular hexagonal subimages each being displayed in a respective image display area 302 and sized to completely fall within the microlens unit 301 when performing segmentation. For example, each subimage may be formed into a hexagon inscribed in a corresponding circular microlens unit 301, or even smaller. By adjusting the distance between the display screen 101 and the microlens array 102, the subimages in the image display areas 302 present a full image in which the plurality of image display areas 302' are tightly spliced together after the subimages are magnified by the circular microlens array 301, allowing what is observed by the eye 105 to be the full image.

According to another embodiment of the present invention, the circular microlens units 301 in Fig. 3(b) are tightly arranged in parallel, that is, lines between centers of four mutually adjacent circular microlens units 301 constitute a square, with its corresponding image display area 303 being square. In particular, the image processing unit 104 segments the original image into a plurality of square subimages each being displayed in a respective image display area 303 and sized to completely fall within the microlens unit 301 when performing segmentation. For example, each subimage may be formed into a square inscribed in a corresponding circular microlens unit 301, or even smaller. After magnified by the circular microlens array 301, the subimages in the image display areas 302 present a full image in which the plurality of image display areas 302' are tightly spliced together, allowing what is observed by the eye 105 to be the full image.

According to another embodiment of the present invention, as shown in Figs. 3(c) and 3(d), the subimages corresponding to the regular hexagonal microlens units 304 and the rectangular microlens units 306 have the same shape as the microlens units 304 and 306, with the image display areas 305 corresponding to the regular hexagonal microlens units 304 being regular hexagonal and the image display areas 307 corresponding to the rectangular microlens units 306 rectangular. The above microlens units 304 and 306 of the two shapes may be arranged together tightly with no clearance left therebetween, resulting in enhanced use efficiency per unit area.

Finally, when the near-eye display of the present invention is used for the first time, it is necessary to make corresponding initialization settings to the vision (diopter) of the user. The vision setting method comprises adjusting the spacing between the microlens array 102 and the display screen, for example by moving the microlens array 102 in a direction towards the display screen (i.e., shortening the spacing), or moving the microlens array 102 in a direction towards the eye (i.e., increasing the spacing) until the user clearly views the reference image displayed on the display screen, thus accomplishing the vision settings for the first use. Afterwards, the near-eye display can be used directly without needing to be reset. The initialization method has the advantages of easy operation, high precision, etc.

The near-eye display according to the present invention is simple in structure, easy to adjust and suitable for wear and use by users having different diopters.

The drawings are merely schematic and have not been drawn to scale. Although the present invention has been described with reference to the preferred embodiments, but it is to be understood that the protection scope of the present invention is not limited to the embodiments described here.

Other embodiments will be conceivable and understood by those skilled in the art upon consideration of this specification or from practice of the invention disclosed herein. The description and embodiments are merely exemplary, and the true scope and spirit are intended to be defined by the claims.

## Claims

1. A microlens array-based near-eye display, comprising: a display screen facing the eyes and displaying images, a microlens array located between the display screen and the eyes, an eyeball-tracing camera and an image processing unit, wherein
the microlens array is used for magnifying and projecting the image displayed on the display screen onto the retinas of the eyes, and comprises a plurality of microlens units having the same shape and structure and arranged into an array, and each microlens unit having the shape selected from a circular, rectangular or regular hexagonal shape; if the microlens unit is circular, it has a diameter D1 of 3∼10 mm, and if the microlens unit is rectangular or regular hexagonal, its circumscribed circle has a diameter D1 of 3∼10mm;
the image displayed on the display screen is divided into a plurality of subimages spaced apart and having the same shape and size, each corresponding to one of the microlens units in the microlens array;
the image processing unit is used for segmenting an original image into a plurality of subimages matching with the microlens array for presentation, and adjusting the image using the position information of the eyes acquired by the eyeball-tracking camera; and
the eyeball-tracking camera is used for tracking and acquiring the position information of pupils of the eyes, and adjusting the position of the subimages according to the position information so as to keep the subimages in the same straight line as corresponding microlens units and the pupils;
wherein the distance between the display screen and the microlens array is adjustable.

2. The near-eye display according to claim 1, wherein each of the microlens units is a plano-convex lens or a double convex lens.

3. The near-eye display according to claim 1, wherein the distance between the display screen and the microlens array is 2 to 3 times D1.

4. The near-eye display according to claim 3, wherein the distance between the display screen and the microlens array is 2.5 times D1.

5. The near-eye display according to claim 1, wherein the image processing unit performs subimage segmentation based on the size of the microlens units, so as to all each subimage to completely fall within the microlens unit.

6. The near-eye display according to claim 5, wherein the shapes of the subimages are regular hexagonal or square.

7. The near-eye display according to claim 1, wherein two eyeball-tracking cameras are provided for tracking the left eye and right eye of the user, respectively.

8. The near-eye display according to claim 7, wherein each of the eyeball-tracking cameras is arranged at the center of an upper edge of the display screen at a position right in front of the eye.

9. A method for displaying images using the near-eye display according to any one of claims 1-8, comprising the following steps:
segmenting the original image into a plurality of subimages matching with the microlens array for presentation, each of which being sized to completely fall within a corresponding microlens unit;
adjusting the distance between the display screen and the microlens array so as to allow the plurality of subimages to be tightly spliced together to form a full image for display; and
adjusting the position of the subimages so as to allow the subimages to be always kept in the same straight line as corresponding microlens units and the pupils of the eyes when the eyes rotate.
